# EUROPÄISCHE PATENTANMELDUNG

(11) **EP 4 008 506 A1**
(43) Veröffentlichungstag der Anmeldung: **08.06.2022**
(21) Anmeldenummer: 20211538.2
(22) Anmeldetag: 03.12.2020
(51) Int. Cl.: B27B 5/065, B27B 31/00

(54) **PLATTENAUFTEILANLAGE ZUM ZERSÄGEN VON WERKSTÜCKEN**

(71) Anmelder: IMA Schelling Austria GmbH, 6858 Schwarzach (AT)
(72) Erfinder: Pöschl, Wolfgang, 6844 Altach (AT); Walch, Alexander, 6700 Bludenz (AT); Rotthowe, Achim, 88079 Kressbronn (DE)
(74) Vertreter: Torggler & Hofmann Patentanwälte - Rankweil

(57) **Zusammenfassung**

Plattenaufteilanlage (1) zum Zersägen von Werkstücken(2), bestehend aus einer Platte oder einem Plattenstapel, wobei die Plattenaufteilanlage (1) einen Werkstückauflagetisch (3) und eine Sägelinie (4) und eine Trennsäge (5), welche entlang der Sägelinie (4) verfahrbar ist, und zwei oder mehr voneinander unabhängig verfahrbare Vorschubeinrichtungen (6) zum Verschieben der auf dem Werkstückauflagetisch (3) liegenden Werkstücke (2) aufweist, wobei den Vorschubeinrichtungen (6) jeweils ein eigener Arbeitsbereich (7) zugeordnet ist, in dem das jeweilige Werkstück (2) von der jeweiligen Vorschubeinrichtung (6) in einer jeweiligen Vorschubrichtung (8) hin zur Sägelinie (4) verschiebbar ist, wobei die Arbeitsbereiche (7) der Vorschubeinrichtungen (6) nebeneinander auf dem Werkstückauflagetisch (3) ausgebildet sind und die Vorschubrichtungen (8) der vorschubeinrichtungen (6) parallel zueinander verlaufen, wobei jeder Vorschubeinrichtung (6) eine Zuführeinrichtung (9) der Plattenaufteilanlage (1) zugeordnet ist, wobei mit jeder der Zuführeinrichtungen (9) jeweils zumindest eines der Werkstücke (2) in den Arbeitsbereich (7) der zugeordneten Vorschubeinrichtung (6) transportierbar ist.

## Beschreibung

Die vorliegende Erfindung betrifft eine Plattenaufteilanlage gemäß des Oberbegriffs des Patentanspruchs 1.

Eine gattungsgemäße Plattenaufteilanlage ist z.B. aus der DE 32 48 261 A1 bekannt. In dieser Schrift sind einer der Sägelinien mehrere parallel arbeitende Vorschubeinrichtungen vorgeschaltet, um so die Plattenaufteilanlage möglichst gut auszulasten und optimiert zu betreiben. Der Nachteil der bei der DE 32 48 261 A1 gezeigten Technologie liegt aber darin, dass die Werkstücke quer durch die Arbeitsbereiche der anderen Vorschubeinrichtungen den jeweiligen Vorschubeinrichtungen zugeführt werden müssen. Dies bedeutet, dass die Vorschubeinrichtung der gattungsgemäßen Plattenaufteilanlage nur abhängig voneinander arbeiten können und zweitweise blockiert sind, wenn neue Werkstücke zu anderen Vorschubeinrichtungen nachgeliefert werden müssen.

Aufgabe der Erfindung ist es, Plattenaufteilanlagen der genannten Art bezüglich ihrer Produktivität weiter zu verbessern.

Hierfür schlägt die Erfindung einer Plattenaufteilanlage gemäß Patentanspruch 1 vor.

Es ist somit vorgesehen, dass jeder Vorschubeinrichtung eine Zuführeinrichtung der Plattenaufteilanlage zugeordnet ist, wobei mit jeder der Zuführeinrichtungen jeweils zumindest eines der Werkstücke in den Arbeitsbereich der zugeordneten Vorschubeinrichtung transportierbar ist.

Eine Grundidee ist daher, dass die Plattenaufteilanlage für jede Vorschubeinrichtung zusätzlich eine Zuführeinrichtung aufweist, mit der Werkstücke zu der jeweiligen Vorschubeinrichtung nachgeliefert werden können. Durch diese Art der Nachlieferung von Werkstücken können die Vorschubeinrichtungen Werkstücke zum Zersägen zur Sägelinie fördern ohne dabei durch die Nachlieferung von Werkstücken zu anderen Vorschubeinrichtungen gestört zu werden. Hierdurch kann entlang der Sägelinie immer die maximal mögliche Anzahl von Werkstücken gleichzeitig zersägt werden. Im Gegensatz zum Stand der Technik sind durch die Erfindung also einzelne Vorschubeinrichtungen nicht mehr blockiert, wenn durch ihren Arbeitsbereich hindurch Werkstücke zur anderen Vorschubeinrichtung nachgeliefert werden müssen. Dadurch, dass jeder Vorschubeinrichtung eine eigene Zuführeinrichtung zugeordnet ist, können die Werkstücke von der jeweiligen Zuführeinrichtung der jeweiligen Vorschubeinrichtung unabhängig davon, in welchem Betriebszustand sich die parallel arbeitenden Vorschubeinrichtungen befinden, nachgeliefert werden. Hierdurch können die Vorschubeinrichtungen mit ihren nebeneinander auf dem Werkstückauflagetisch ausgebildeten Arbeitsbereichen vollständig unabhängig voneinander betrieben werden. Durch die jeweilige Zuführeinrichtung können in den Arbeitsbereich der jeweils zugeordneten Vorschubeinrichtung bereits dann Werkstücke nachgeliefert werden, wenn diese Vorschubeinrichtung noch damit beschäftigt ist, das vorhergehende Werkstück der Sägelinie zuzuführen. Die Zuführeinrichtung sorgt also dafür, dass bei der jeweils zugeordneten Vorschubeinrichtung möglichst kein Leerlauf und keine Leerzeiten entstehen. Man könnte auch davon sprechen, dass jede Zuführeinrichtung derjenigen Vorschubeinrichtung, der sie zugeordnet ist, jeweils zuarbeitet.

Der Arbeitsbereich der jeweiligen Vorschubeinrichtung ist der Bereich auf dem Werkstückauflagetisch, auf dem diese Vorschubeinrichtung Werkstücke in ihrer jeweiligen Vorschubrichtung zur Sägelinie hin und auch entgegen der jeweiligen Vorschubrichtung von der Sägelinie weg schieben bzw. ziehen kann. Die nebeneinander auf dem Werkstückauflagetisch angeordneten Arbeitsbereiche der verschiedenen Vorschubeinrichtungen können grundsätzlich einander überlappen. Bevorzugte Varianten der Erfindung sehen aber im Sinne einer möglichst maximalen Unabhängigkeit der Vorschubeinrichtungen voneinander vor, dass die nebeneinander angeordneten Arbeitsbereiche der Vorschubeinrichtungen voneinander getrennt ausgebildet sind, also in anderen Worten nicht überlappen oder in nochmals anderen Worten ohne Überlappung nebeneinander angeordnet sind. Dies kann z.B. dadurch erreicht werden, dass zwischen jeweils zwei zueinander benachbarten Arbeitsbereichen zumindest bereichsweise jeweils eine Anschlagschiene angeordnet ist. Die Anschlagschienen können dann zusätzlich, wie an sich bekannt, auch zum Ausrichten des Werkstücks im jeweiligen Arbeitsbereich verwendet werden. In diesem Sinne ist es dann bevorzugt vorgesehen, dass zumindest einem der Arbeitsbereiche, vorzugsweise allen Arbeitsbereichen, eine Ausrichteinrichtung der Plattenaufteilanlage zum Ausrichten des jeweiligen Werkstücks, vorzugsweise in Richtung parallel und/oder orthogonal zu der jeweiligen Vorschubrichtung, zugeordnet ist. Die Ausrichteinrichtungen und die Anschlagschienen können dabei in an sich bekannter Art und Weise zusammenarbeiten.

Die Trennsäge wird entlang der Sägelinie verfahren, um so die Werkstücke zu zersägen. Bevorzugt ist vorgesehen, dass die Trennsäge in einem Sägewagen angeordnet ist, mit dem sie entlang der Sägelinie verfahrbar ist. Die Trennsäge kann z.B. ein rotierendes Kreissägeblatt aufweisen oder daraus ausgebildet sein. Diesem kann ein Vorritzersägeblatt vorgeordnet sein. Günstigerweise ist die Trennsäge bzw. ihr Sägeblatt im Sägewagen versenkbar und über die jeweilige Auflageebene des Werkstückauflagetisches im Bereich der Sägelinie anhebbar.

Mit den Vorschubeinrichtungen werden die Werkstücke in ihren jeweiligen Arbeitsbereichen für den Sägevorgang zur Sägelinie hin transportiert. Dieser Transport hin zur Sägelinie erfolgt in der jeweiligen Vorschubrichtung der jeweiligen Vorschubeinrichtung. Die Vorschubeinrichtungen können die Werkstücke, wenn notwendig, bevorzugt aber auch entgegen der Vorschubrichtung, also von der Sägelinie weg verschieben bzw. transportieren. Besonders bevorzugt ist vorgesehen, dass jede der Vorschubeinrichtungen ein orthogonal zu ihrer Vorschubrichtung verlaufenden und in ihrer Vorschubrichtung verfahrbaren Träger mit zumindest einem daran heb- und senkbar angeordneten Greifer zum Greifen eines der Werkstücke aufweist. Bevorzugt weist jeder Träger mehrere Greifer auf. Die jeweiligen Träger und Greifer sind günstigerweise über dem Werkstückauflagetisch angeordnet und können über dem Werkstückauflagetisch in der Vorschubrichtung und entgegen der Vorschubeinrichtung verfahren werden, wobei die Vorschubeinrichtungen diese Verfahrbewegung unabhängig voneinander durchführen können. Günstigerweise sind die Vorschubeinrichtungen so ausgebildet, dass zumindest bei angehobenen Greifern Werkstücke unter ihnen hindurch transportiert werden können, z.B. wenn die zugeordneten Zuführeinrichtungen ein neues Werkstück in den Arbeitsbereich der jeweiligen Vorschubeinrichtung transportieren.

Grundsätzlich wäre es möglich, dass auch die Zuführeinrichtungen jeweils einen Träger mit daran angeordneten Greifern aufweisen, also ähnlich wie die Vorschubeinrichtungen ausgebildet sind. Bevorzugte Varianten der Erfindung sehen aber vor, dass die Zuführeinrichtungen jeweils als angetriebene Förderbahnen ausgebildet sind, auf denen jeweils zumindest eines der Werkstücke liegend transportierbar ist. Angetriebene Förderbahnen sind bei Plattenaufteilanlagen an sich bekannt. Es kann sich z.B. um angetriebene Rollenbahnen, um Förderbänder oder dergleichen handeln.

Um die Vorschubeinrichtungen möglichst unabhängig voneinander betreiben zu können, sehen bevorzugte Varianten vor, dass die Arbeitsbereiche der Vorschubeinrichtungen jeweils zwischen der Sägelinie und der der jeweiligen Vorschubeinrichtung zugeordneten Zuführeinrichtung ausgebildet sind. Vereinfacht gesprochen ist also günstigerweise vorgesehen, dass die jeweilige Zuführeinrichtung sozusagen auf der der Sägelinie gegenüberliegenden Seite des jeweiligen Arbeitsbereichs der zugeordneten Vorschubeinrichtungen angeordnet ist. Zuführeinrichtungen können sozusagen von hinten Werkstücke in den jeweiligen Arbeitsbereich der jeweiligen Vorschubeinrichtung nachführen, wodurch die in benachbarten Arbeitsbereichen arbeitenden Vorschubeinrichtungen jeweils nicht gestört werden.

Bevorzugt ist auch vorgesehen, dass mit jeder der Zuführeinrichtungen jeweils zumindest eines der Werkstücke in einer Transportrichtung der jeweiligen Zuführeinrichtung in den Arbeitsbereich der zugeordneten Vorschubeinrichtung transportierbar ist und die jeweiligen Transportrichtungen der Zuführeinrichtungen parallel zu den Vorschubrichtungen der Vorschubeinrichtungen verlaufen.

Der Begriff des Werkstücks ist allgemein aufzufassen. Es kann sich sowohl um eine einzelne Platte als auch um einen Plattenstapel handeln. Werkstücke können noch vollkommen unbearbeitete Platten oder Stapel aus solchen vollkommen unbearbeiteten Platten sein. Bei den Werkstücken kann es sich aber auch um bereits bearbeitete, also z.B. teilweise zersägte und/oder besäumte Platten oder Plattenstapel handeln. Besonders bevorzugt ist sogar vorgesehen, dass die Plattenaufteilanlage zumindest eine vorgelagerte Bearbeitungsstation zum Zersägen und/oder Besäumen der Werkstücke vor ihrer Zuführung zu den Zuführeinrichtungen aufweist. In diesem Fall handelt es sich bei den Werkstücken dann um solche, welche in der vorgelagerten Bearbeitungsstation bereits zumindest einmal zersägt und/oder besäumt worden sind, bevor sie mittels der jeweiligen Zuführeinrichtung in den jeweiligen Arbeitsbereich der Vorschubeinrichtung transportiert werden. Besonders bevorzugt ist dabei vorgesehen, wenn die Werkstücke bereits besäumt sind. Besonders günstig ist es, wenn sie mit ihrem bereits besäumten Ende in Richtung Sägelinie weisen, wenn sie von der jeweiligen Zuführeinrichtung in den jeweiligen Arbeitsbereich der jeweiligen Vorschubeinrichtung eingebracht werden.

Bevorzugte Varianten der Erfindung sehen vor, dass die Plattenaufteilanlage eine Hebevorrichtung zum Zuführen des jeweiligen Werkstücks zur jeweiligen Zuführeinrichtung von oben und zum Ablegen des jeweiligen Werkstücks bei, vorzugsweise auf, der jeweiligen Zuführeinrichtung aufweist. In anderen Worten ist bevorzugt vorgesehen, dass die Werkstücke in den jeweiligen Bereich der jeweiligen Zuführeinrichtung mittels der Hebevorrichtung hineingehoben werden können. Günstige Varianten sehen dabei vor, dass die Hebevorrichtung eine Werkstückaufnahmevorrichtung zum Aufnehmen der Werkstücke aufweist, welche in der vertikalen Raumrichtung und in ein oder zwei horizontalen Raumrichtungen bewegbar ist. Für solche Hebevorrichtungen gibt es verschiedene, beim Stand der Technik auch bei Plattenaufteilanlagen an sich bekannte Varianten. Z.B. kann vorgesehen sein, dass die Hebevorrichtung einen in den Raumrichtungen bewegbaren Roboterarm aufweist, an dem die Werkstückaufnahmevorrichtung angeordnet ist. Andere Varianten können vorsehen, dass die Hebevorrichtung einen Portalkran aufweist, mit dem die Werkstückaufnahmevorrichtung in den Raumrichtungen bewegbar ist. Entsprechende Werkstückaufnahmevorrichtungen sind beim Stand der Technik an sich bekannt. Es kann z.B. vorgesehen sein, dass die Werkstückaufnahmevorrichtungen eine oder mehrere Saugglocken aufweist, an der bzw. denen die Werkstücke mittels Ansaugen befestigbar sind. Es können aber auch an sich bekannte Werkstückaufnahmevorrichtungen verwendet werden, mit denen vor allem mehrere aufeinander gestapelte Platten von der Seite her gegriffen werden können. Günstige Varianten sehen jedenfalls vor, dass die Werkstücke mit der Hebevorrichtung auch um eine, vorzugsweise vertikale, Achse gedreht werden können bzw. in anderen Worten, dass die Hebevorrichtung auch eine Dreheinrichtung zum Drehen der an der Werkstückaufnahmevorrichtung befestigten Werkstücke aufweist. Üblicherweise wird die Werkstückaufnahmevorrichtung dabei zusammen mit den Werkstücken gedreht.

Um immer im Sinne einer möglichst optimalen Auslastung der Sägelinie eine ausreichende Anzahl von noch zu bearbeitenden Werkstücken zur Verfügung zu haben, die mittels der Zuführeinrichtungen in die Arbeitsbereiche der zugeordneten Vorschubeinrichtungen transportierbar sind, sehen bevorzugte Varianten der Plattenaufteilanlage vor, dass sie einen Speicher zum Speichern der Werkstücke aufweist, aus dem die Werkstücke, vorzugsweise von der Hebevorrichtung, entnehmbar sind. Im Sinne einer maximalen Flexibilität ist dabei günstigerweise vorgesehen, dass der Speicher eine Sortierfunktion aufweist, aufgrund der die Werkstücke, vorzugsweise mittels der Hebevorrichtung, unabhängig von der Reihenfolge ihrer Einlagerung aus dem Speicher entnehmbar sind. Solche Speicher mit Sortierfunktion sind an sich bekannt. Z.B. kann vorgesehen sein, dass der Speicher mehrere übereinander angeordnete Speicheretagen aufweist, in die die Werkstücke von einer Einlagerungsvorrichtung des Speichers einlagerbar und aus denen die Werkstücke von einer Entnahmevorrichtung des Speichers entnehmbar sind.

Der Sägelinie ist günstigerweise, wie an sich bekannt, eine Druckbalkenvorrichtung zugeordnet, mit der die in den verschiedenen Arbeitsbereichen liegenden Werkstücke während des Sägevorgangs auf den Werkstückauflagetisch angedrückt werden können. Die Druckbalkenvorrichtung kann einen einzigen, sich über die gesamte Sägelinie erstreckenden Druckbalken aufweisen. Bevorzugte Varianten sehen aber vor, dass der Sägelinie eine Druckbalkenvorrichtung mit mehreren, voneinander unabhängig betätigbaren und jeweils einem oder mehreren der Arbeitsbereiche zugeordneten Druckbalkensegmenten zum Andrücken zumindest eines der Werkstücke auf den Werkstückauflagetisch zugeordnet ist.

Darüber hinaus ist darauf hinzuweisen, dass erfindungsgemäße Plattenaufteilanlagen auch eine unterschiedliche Anzahl an entlang der Sägelinie verfahrbaren Trennsägen aufweisen kann. Es kann durchaus vorgesehen sein, dass nur eine einzige Trennsäge entlang der Sägelinie verfahrbar ist, um mit dieser einzigen Trennsäge alle in den Arbeitsbereichen der Vorschubeinrichtung liegenden Werkstücke zu zersägen. Im Sinne einer weiteren Flexibilisierung kann aber auch vorgesehen sein, dass die Plattenaufteilanlage zwei oder mehr Trennsägen aufweist, welche, vorzugsweise ungekoppelt, entlang der Sägelinie verfahrbar sind. In diesem Fall sind also entlang derselben Sägelinie mehrere Trennsägen verfahrbar. Diese sind günstigerweise ungekoppelt, also nicht miteinander gekoppelt, sondern je nach Bedarf unabhängig voneinander betreibbar.

Bevorzugte Varianten der erfindungsgemäßen Plattenaufteilanlage sehen vor, dass die Plattenaufteilanlage eine Rückführeinrichtung zur Rückführung von Werkstücken aus einem Bereich hinter der Sägelinie in einen Bereich vor der Sägelinie aufweist. Solche Rückführeinrichtungen sind an sich bekannt. Es kann sich um, um die Sägelinie herumführende Förderbahnen handeln, auf denen die Werkstücke horizontal liegend transportiert werden. Es kann sich auch um Hebevorrichtungen handeln, mit denen die Werkstücke über die Sägelinie hinweg gehoben werden. Insbesondere bei Platzmangel kann es sich aber auch um Förderbahnen handeln, bei denen die Werkstücke schräg aufgestellt transportiert werden.

Neben der Plattenaufteilanlage an sich betrifft die Erfindung auch ein Verfahren zum Betrieb einer erfindungsgemäßen Plattenaufteilanlage. Dieses Verfahren ist dadurch gekennzeichnet, dass die Werkstücke mittels der Zuführeinrichtung voneinander unabhängig jeweils dem Arbeitsbereich der der jeweiligen Zuführeinrichtung zugeordneten Vorschubeinrichtung zugeführt werden. Vorzugsweise wird dieses Zuführen der Werkstücke in den Arbeitsbereich mittels der Zuführeinrichtung durchgeführt, während jeweils ein anderes Werkstück von der jeweiligen Vorschubeinrichtung der Sägelinie zum Zersägen zugeführt wird. Die Zuführung neuer Werkstücke mittels der Zuführeinrichtungen in den jeweiligen Arbeitsbereich der jeweiligen Vorschubeinrichtung erfolgt also günstigerweise bereits dann, wenn das vorhergehende Werkstück von der zugeordneteb Vorschubeinrichtung noch der Sägelinie zugeführt wird. Mit dem erfindungsgemäßen Verfahren kann eine möglichst optimale Auslastung der Plattenaufteilanlage, insbesondere im Bereich der Sägelinie, erreicht werden. In diesem Sinne ist es auch günstig, wenn bei jedem Sägevorgang entlang der Sägelinie in allen Arbeitsbereichen Werkstücke liegen, welche bei diesem Sägevorgang zersägt werden.

Weitere Merkmale und Einzelheiten bevorzugter Ausgestaltungsformen der Erfindung werden beispielhaft in der nachfolgenden Figurenbeschreibung erläutert. Es zeigen:
- Fig. 1: eine perspektivische Ansicht auf ein Ausführungsbeispiel einer Plattenaufteilanlage, in der die Erfindung realisiert ist;
- Fig. 2: eine Draufsicht auf die Plattenaufteilanlage gemäß Fig. 1;
- Fig. 3: eine vergrößerte perspektivische Ansicht auf den Bereich der Plattenaufteilanlage aus den Fig. 1 und 2, in dem die Kerngedanken der Erfindung realisiert sind;
- Fig. 4: eine Draufsicht zu Fig. 3;
- Fig. 5 und 6: Seitenansichten zu dem Bereich der Plattenaufteilanlage aus den Fig. 1 bis 4, in dem die erfindungswesentlichen Kerngedanken realisiert sind;
- Fig. 7 bis 9: Darstellungen zu verschiedenen Ausführungsvarianten, wie die Plattenaufteilanlage aus den Fig. 1 bis 4 im Bereich der Sägelinie ausgebildet sein kann;
- Fig. 10 und 11: ein Werkstück und einen darauf projizierten Schnittplan;
- Fig. 12 bis 15: Darstellungen zu einem zweiten Werkstück mit darauf projiziertem Schnittplan;
- Fig. 16: eine Darstellung zum Füllgrad des Speichers in Abhängigkeit von der Zeit und
- Fig. 17 bis 22: stark schematisierte Darstellungen zu verschiedenen Ausgestaltungsformen erfindungsgemäßer Plattenaufteilanlagen.

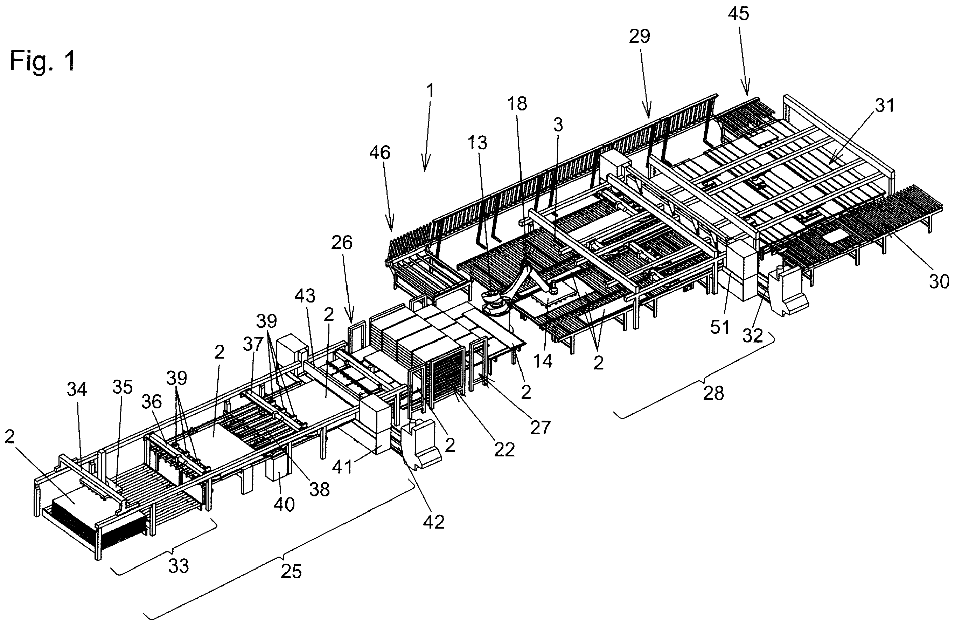

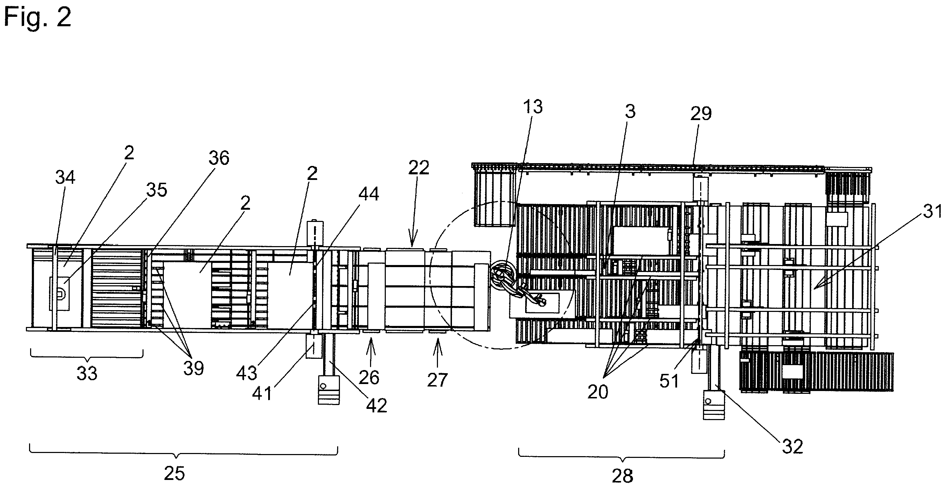

Die Fig. 1 und 2 zeigen die gesamte Plattenaufteilanlage 1 dieses Ausführungsbeispiels. Diese weist eine vorgelagerte Bearbeitungsstation 25 und eine Bearbeitungsstation 28 auf. In der Bearbeitungsstation 28 sind, wie weiter unten im Detail beschrieben, wesentliche Kerngedanken der Erfindung realisiert. Zwischen den beiden Bearbeitungsstationen 25 und 28 befindet sich ein Speicher 22 mit einer Einlagerungsvorrichtung 26 und einer Entnahmevorrichtung 27 für die Werkstücke 2. Zwischen dem Speicher 22 und der Bearbeitungsstation 28 befindet sich eine Hebevorrichtung 13. Hinter der Bearbeitungsstation 28 befindet sich eine Sortierstation 31 mit einem Abführbereich 30. Um die Sägelinie 4 der Bearbeitungsstation 28 herum führt eine Rückführeinrichtung 29.

Zunächst wird anhand der Fig. 1 und 2 die Funktionsweise der hier beispielhaft dargestellten, vorgelagerten Bearbeitungsstation 25 erläutert. Mit ihr können Werkstücke 2 sowohl zersägt als auch besäumt werden. Die Bearbeitungsstation 25 weist einen an sich bekannten Werkstückpuffer 33 auf, in dem bereits bearbeitete oder auch noch vollständig unbearbeitete Werkstücke 2 gelagert werden können. Mit der hier als Portalkran ausgebildeten Hebevorrichtung 34 und deren Werkstückaufnahmevorrichtung 35 können die Werkstücke 2 vom Werkstückpuffer 33 aufgenommen und zum Werkstückauflagetisch 38 transportiert und dort abgelegt werden. Natürlich könnten der Werkstückpuffer 33 und die Zuführung der Werkstücke 2 zum Werkstückauflagetisch 38 auch anders als hier realisiert, in anderen beim Stand der Technik an sich bekannten Varianten ausgeführt sein. Die Hebevorrichtung 34 ist günstigerweise so ausgebildet, dass sie die Werkstückaufnahmevorrichtung 35 samt daran befestigtem Werkstück um eine vertikale Achse drehen kann.

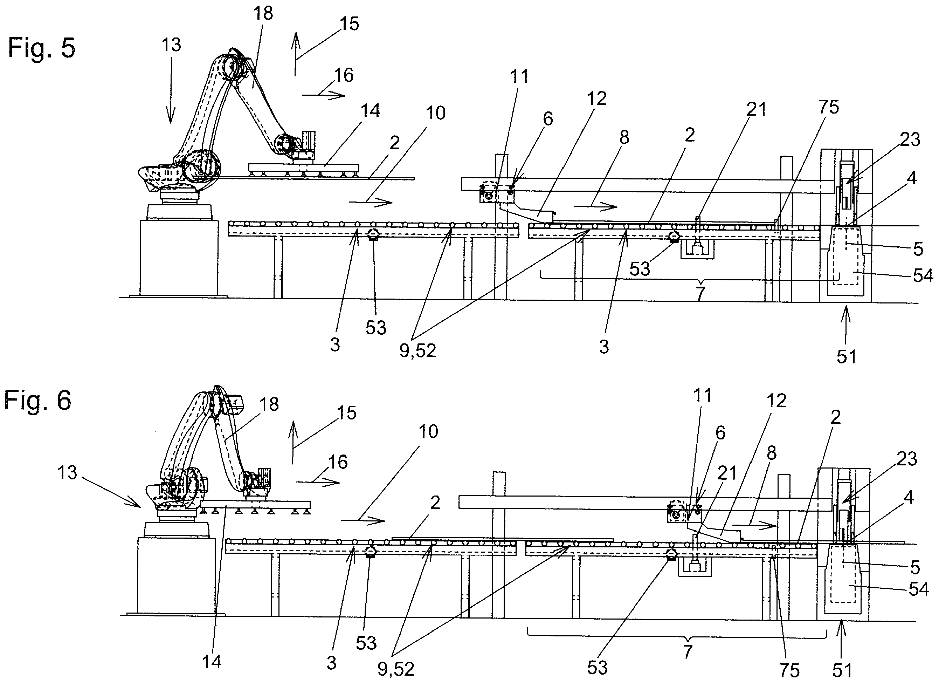

In den Werkstückauflagetisch 38 können, wie an sich bekannt, Ausrichteinrichtungen und Anschlagschienen zum Ausrichten des Werkstücks 2 integriert sein. Genauso gut können in den Werkstückauflagetisch 38 Dreheinrichtungen zum Drehen der auf dem Werkstückauflagetisch 38 liegenden Werkstücke 2 integriert sein, ohne dass dies hier im Detail dargestellt ist. Zum Transport der auf dem Werkstückauflagetisch 38 liegenden Werkstücke 2 können eine oder mehrere Vorschubvorrichtungen 36, 37 vorgesehen sein. Im vorliegenden, in Fig. 1 gezeigten Beispiel handelt es sich um eine erste Vorschubvorrichtung 36 und eine zweite Vorschubvorrichtung 37, welche jeweils zur Sägestation 41 hin und von dieser weg verschiebbar sind, um so die Werkstücke 2 zur Sägestation 41 hin und, wenn nötig, von dieser auch wieder weg zu befördern. Beide Vorschubvorrichtungen 36 und 37 haben jeweils Greifer 39, um das jeweils auf dem Werkstückauflagetisch 38 liegende Werkstück 2 zu greifen. Die Greifer 39 sind günstigerweise heb- und senkbar über dem Werkstückauflagetisch 38 ausgebildet. Die Verwendung von zwei Vorschubvorrichtungen 36 und 37 vor einer Sägestation 41 hat den Vorteil, dass die hintere Vorschubvorrichtung, also hier die erste Vorschubvorrichtung 36 bereits neue Werkstücke 2 heranfördern kann, während das noch an der zweiten Vorschubvorrichtung 37 festgeklemmte vorhergehende Werkstück 2 entlang der in der Sägestation 41 ausgebildeten Sägelinie 44 weiter zersägt wird. Die hier nur schematisiert dargestellte Sägestation 41 weist einen Druckbalken 43 auf, mit dem die Werkstücke 2 während des Sägevorgangs auf die Sägelinie 44 bzw. auf den Werkstückauflagetisch 38 gedrückt werden können, um so einen sauberen Schnitt zu erzeugen. Günstigerweise ist entlang der Sägelinie 44 z.B. in einem Sägewagen eine Trennsäge vorhanden, die zum Durchführen der Sägevorgänge entlang der Sägelinie 44 verfahren werden kann. Diese Trennsäge ist günstigerweise dabei über die Auflageebene des Werkstückauflagetisches 38 anhebbar und unter diese absenkbar. All dies ist an sich bekannt und muss nicht weiter erläutert werden. Die entlang der Sägelinie 44 verfahrbare Trennsäge der Sägestation 41 kann jedenfalls im Wesentlichen genauso wie die Trennsäge 5 der Bearbeitungsstation 28, welche entlang der Sägelinie 4 verfahrbar ist, ausgeführt sein. Letzteres wird beispielhaft weiter hinten noch anhand von Fig. 5 und 6 erläutert.

Vor der Sägestation 41 weist die Bearbeitungsstation 25 in bevorzugten wie der hier gezeigten Ausgetaltungsform eine Besäumstation 40 auf. Diese erlaubt es, Werkstücke 2 bereits auf ihrem Weg hin zur Sägestation 41 zu besäumen. Dabei kann das Werkstück 2 mittels einer der Vorschubvorrichtungen 36 und 37 an der Besäumstation 40 vorbeigeschoben werden. Es ist aber abweichend vom hier gezeigten Ausführungsbeispiel auch denkbar, dass das Werkstück 2 während des Besäumvorgangs stationär festgehalten wird und die Besäumstation 40 ein Besäumwerkzeug aufweist, welches dann entlang des Werkstücks 2 gefahren wird, um so das Abtrennen des Saumes zu erledigen. Als Besäumwerkzeuge der Besäumstation 40 kommen sowohl Sägeblätter wie z.B. Kreissägeblätter, aber genauso gut auch Fräsköpfe oder dergleichen in Frage.

Hinter der Sägestation 41 befindet sich im hier gezeigten Ausführungsbeispiel eine Abfallentsorgungsvorrichtung 42, mittels der bei den Sägevorgängen in der Sägestation 41 entstehende Abfälle, welche nicht weiter verarbeitet werden, entsorgt werden können. Auch solche Abfallentsorgungsvorrichtungen 42 sind an sich bekannt und müssen nicht weiter erläutert werden.

Sind, wie in dem hier gezeigten Ausführungsbeispiel realisiert, zwei Vorschubvorrichtungen 36 und 37 vorhanden, so ermöglicht dies ein sehr effektives Verfahren zum Betrieb der Bearbeitungsstation 25 und damit auch der gesamten Plattenaufteilanlage 1. Dieses sieht vor, dass die zweite Vorschubvorrichtung 37 in Richtung hin zur Sägestation 41 gefahren und ihre Greifer 39 angehoben werden. Dann kann die erste Vorschubvorrichtung 36 unter der zweiten Vorschubvorrichtung 37 hindurch ein Werkstück 2 zur Sägestation 41 und damit auch zur Sägelinie 44 so weit verschieben, dass das Werkstück 2 durch Absenken des Druckbalkens 43 auf den Werkstückauflagetisch 38 angedrückt und der erste Sägevorgang durch Verfahren der Trennsäge entlang der Sägelinie 44 durchgeführt werden kann. Währenddessen das Werkstück 2 mittels des Druckbalkens 43 auf den Werkstückauflagetisch 38 gedrückt wird, kann die erste Vorschubvorrichtung 36 von diesem Werkstück 2 gelöst und von der Sägestation 41 weg zurückgefahren werden, um bereits ein weiteres Werkstück 2 mit seinen Greifern 39 zu greifen. Die zweite Vorschubvorrichtung 37 kann dann das sich derzeit bei der Sägestation 41 befindende Werkstück 2 mit seinen Greifern 39 greifen, um so den Vorgang des Zersägens des Werkstücks 2 an der Sägelinie 44 in an sich bekannter Art und Weise weiterzuführen. Die Übernahme des vom Druckbalken 43 gerade an den Werkstückauflagetisch 38 angedrückten Werkstücks 2 von der ersten Vorschubvorrichtung 36 durch die zweite Vorschubvorrichtung 37 muss dabei nicht zwingend während des ersten Sägevorgangs entlang der Sägelinie 44 an diesem Werkstück 2 sondern kann auch während eines späteren, entlang der Sägelinie 44 an diesem Werkstück 2 durchgeführten Sägevorgangs erfolgen.

Auf dem Weg hin zur Sägestation 41 kann in bevorzugten Varianten dann auch gleich ein Besäumvorgang mit der Besäumstation 40 durchgeführt werden.

In dem in Fig. 1 und 2 gezeigten Ausführungsbeispiel einer Plattenaufteilanlage 1 werden die Werkstücke 2, welche durch das Zersägen an der Sägestation 41 entstanden sind und keinen Abfall bilden, in den nachfolgend angeordneten Speicher 22 eingelagert. Grundsätzlich können hier verschiedenste an sich bekannte Arten von Speichern eingesetzt werden. Der hier gezeigte Speicher 22 hat, wie auch andere bevorzugte Varianten, eine Sortierfunktion. Diese erlaubt es, die in den Speicher 22 eingelagerten Werkstücke 2 unabhängig von der Reihenfolge ihrer Einlagerung wieder aus dem Speicher 22 zu entnehmen. Konkret ist dies hier dadurch gelöst, dass der Speicher 22 mehrere Etagen aufweist, in die jeweils Werkstücke 2 eingelagert werden können. Die Einlagerung der Werkstücke 2 erfolgt über eine Einlagerungsvorrichtung 26, die dazu geeignet ist, die von der Sägestation 41 kommenden Werkstücke 2 in unterschiedlichen Etagen des Speichers 22 einzulagern. Hinter dem Speicher 22 befindet sich eine Entnahmevorrichtung 27, welche dazu geeignet ist, aus unterschiedlichen Etagen des Speichers 22 dort eingelagerte Werkstücke 2 wieder zu entnehmen. Auf diese Art und Weise kann die Sortierfunktion realisiert werden, sodass die Werkstücke 2 nicht zwingend in der Reihenfolge aus dem Speicher 22 entnommen werden müssen, in der sie eingelagert wurden. Natürlich könnte der Speicher 22 mit und/oder ohne Sortierfunktion auch anders, wie beim Stand der Technik an sich bekannt, ausgeführt sein.

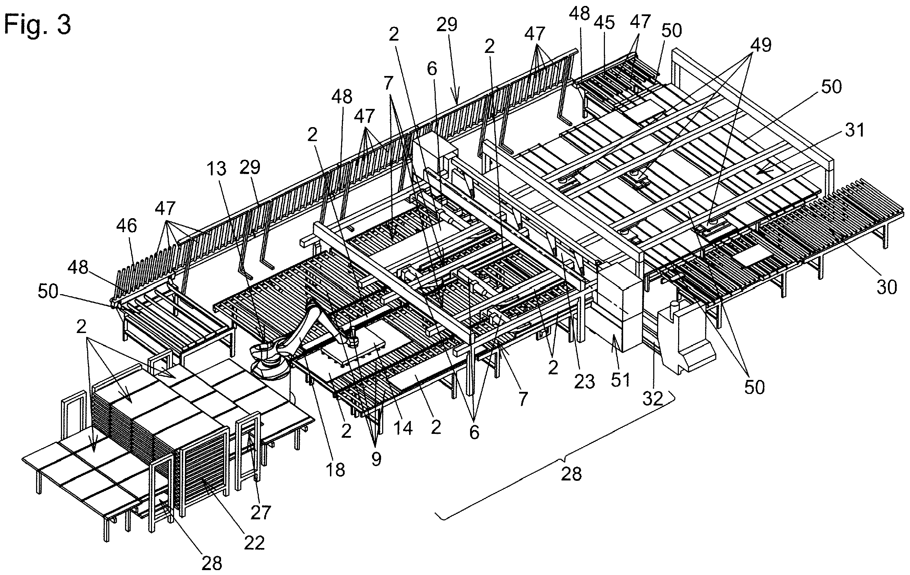

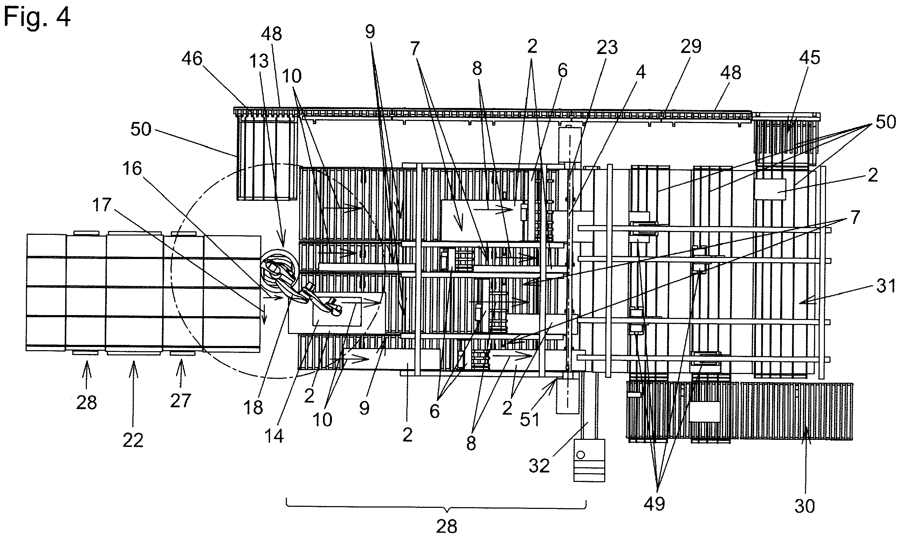

Die Kerngedanken der Erfindung sind in diesem Ausführungsbeispiel in der Bearbeitungsstation 28 der Plattenaufteilanlage 1 realisiert. Dies wird im Folgenden anhand der Fig. 3 und 4 genauer beschrieben.

Die Bearbeitungsstation 28 und damit die Plattenaufteilanlage 1 weist den Werkstückauflagetisch 3 und eine entlang der Sägelinie 4 verfahrbare Trennsäge 5 auf. Die Sägelinie 4 ist in der Sägestation 51 angeordnet. Die Sägestation 51 ist in den Fig. 5 und 6 detaillierter gezeigt. Über dem Werkstückauflagetisch 3 sind in diesem Ausführungsbeispiel vier Vorschubeinrichtungen 6 vorhanden, mit denen Werkstücke 2 jeweils in der Vorschubrichtung 8, auf den Werkstückauflagetisch 3 liegend, hin zur Sägelinie 4 geschoben werden können, um die Werkstücke 2 so auf der Sägelinie 4 zur Durchführung der Schnitte anzuordnen. Wenn nötig, können die Vorschubeinrichtungen 6 die Werkstücke 2 auch entgegen ihrer jeweiligen Vorschubrichtung 8 zurückziehen. Die Vorschubeinrichtungen 6 weisen jeweils einen in Vorschubrichtung 8 und auch entgegen der Vorschubrichtung 8 verfahrbaren Träger 11 auf, an dem an sich bekannte Greifer 12 zum Greifen des Werkstücks 2 vorgesehen sind. Die Greifer 12 können jeweils zum Werkstückauflagetisch 3 abgesenkt, aber auch gegenüber diesem angehoben werden. Die Vorschubeinrichtungen 6 sind unabhängig voneinander betreibbar. Die Vorschubrichtungen 8 sind günstigerweise parallel zueinander ausgerichtet, wie dies in diesem Ausführungsbeispiel auch der Fall ist. Jede Vorschubeinrichtung 6 hat einen eigenen Arbeitsbereich 7 auf dem Werkstückauflagetisch 3. Diese Arbeitsbereiche 7 sind nebeneinander angeordnet. Grundsätzlich ist es denkbar, dass sie sich überlappen. In bevorzugten Ausgestaltungsformen, wie der hier gezeigten, sind sie aber voneinander abgegrenzt. Im vorliegenden Ausführungsbeispiel erfolgt die Abgrenzung mittels der Anschlagschienen 20. Mittels der Anschlagschienen 20 und der jeweiligen Ausrichteinrichtung 21 können die Werkstücke 2 im jeweiligen Arbeitsbereich 7 auch ausgerichtet werden.

Erfindungsgemäß ist in diesem Ausführungsbeispiel jeder Vorschubeinrichtung 6 eine Zuführeinrichtung 9 der Plattenaufteilanlage 1 zugeordnet. Mit jeder der Zuführeinrichtungen 9 können Werkstücke 2 in den jeweiligen Arbeitsbereich 7 der zugeordneten Vorschubeinrichtung 6 transportiert werden. Insbesondere in Fig. 4 ist sichtbar, dass die jeweiligen Arbeitsbereiche 7 der jeweiligen Vorschubeinrichtungen 6 jeweils zwischen der Sägelinie 4 und der, der jeweiligen Vorschubeinrichtung 6 zugeordneten Zuführeinrichtung 9 ausgebildet sind. Die Transportrichtungen 10 der jeweiligen Zuführeinrichtungen 9, in denen die Werkstücke 2 von der jeweiligen Zuführeinrichtung 9 in den jeweiligen Arbeitsbereich 7 der zugeordneten Vorschubeinrichtung 6 transportiert werden können, sind, wie in Fig. 4 gut zu sehen, parallel zu den Vorschubrichtungen 8 der Vorschubeinrichtungen 6 angeordnet. Im hier gezeigten Ausführungsbeispiel sind die Zuführeinrichtungen 9 jeweils als angetriebene Förderbahnen 52, hier konkret als angetriebene Rollenbahnen ausgebildet. Solche Förderbahnen 52 bzw. Rollenbahnen sind beim Stand der Technik an sich bekannt. Auf ihnen kann jeweils zumindest eines der Werkstücke 2 liegend transportiert werden. Es ist aber auch darauf hinzuweisen, dass die Zuführeinrichtungen 9 alternativ zum hier gezeigten Ausführungsbeispiel genauso wie die Vorschubeinrichtungen 6 mit entsprechenden Trägern und daran angeordneten Greifern über dem Werkstückauflagetisch 3 ausgebildet sein könnten. Es wäre sogar auch denkbar, die Vorschubeinrichtungen 6 als entsprechende Förderbahnen bzw. Rollenbahnen auszubilden.

Wichtig ist, dass die Vorschubeinrichtungen 6 voneinander unabhängig betreibbar sind. Günstig ist es auch wenn die Zuführrichtungen 9 ebenfalls unabhängig voneinander betreibbar sind.

Beim Betrieb der Plattenaufteilanlage 1 werden die Werkstücke 2 mittels der Zuführeinrichtungen 9 voneinander unabhängig jeweils dem Arbeitsbereich 7 der der jeweiligen Zuführeinrichtung 9 zugeordneten Vorschubeinrichtung 6 zugeführt. Bevorzugt ist dabei vorgesehen, dass gleichzeitig jeweils ein anderes Werkstück 2 von den jeweiligen Vorschubeinrichtungen 6 der Sägelinie 4 zum Zersägen zugeführt wird. Vereinfacht gesprochen sorgen die Zuführeinrichtungen 9 somit für den benötigten Nachschub an Werkstücken 2, während mit den Vorschubeinrichtungen 6 die vorhergehenden Werkstücke 2 im jeweiligen Arbeitsbereich 7 entlang der Sägelinie 4 noch zersägt werden. Diese Situation ist besonders gut in der Draufsicht gemäß Fig. 4 beispielhaft dargestellt. Die aktuell zu zersägenden Werkstücke 2 werden in den Arbeitsbereichen 7 der Sägelinie 4 zum Zersägen zugeführt. Dabei können die Vorschubeinrichtungen 6 vollkommen unabhängig voneinander arbeiten. Bevorzugt ist vorgesehen, dass bei jedem Sägevorgang entlang der Sägelinie 4 in allen Arbeitsbereichen 7 Werkstücke 2 liegen, welche bei diesem Sägevorgang zersägt werden. Fig. 4 zeigt auch, dass je nach Arbeitsfortschritt im jeweiligen Arbeitsbereich 7 die jeweils zugeordneten Zuführeinrichtungen 9 bereits weitere Werkstücke 2 nachliefern können, sodass jede Vorschubeinrichtung 6, wenn das bisherige Werkstück 2 fertig zersägt ist, in ihrem Arbeitsbereich 7 bereits das nächste von der jeweiligen Zuführeinrichtung 9 bereits nachgelieferte Werkstück 2 vorfindet, dieses greifen und gleich zum weiteren Zersägen zur Sägelinie 4 vorschieben kann.

Das Zuführen der Werkstücke 2 zu den jeweiligen Zuführeinrichtungen 9 erfolgt in bevorzugten Ausgestaltungsformen, wie der hier gezeigten, mittels einer Hebevorrichtung 13, welche dazu geeignet ist, Werkstücke 2 zur Zuführeinrichtung 9 hin zu heben und von oben, in diesem Fall auf der jeweiligen Zuführeinrichtung 9, abzulegen. Die Hebevorrichtung 13 entnimmt hierzu die Werkstücke 2 aus der Entnahmevorrichtung 27 des Speichers 22 und legt sie auf die jeweilige Zuführeinrichtung 9. Im ersten Ausführungsbeispiel ist die Hebevorrichtung 13, wie in Fig. 3 und 4 zu sehen, in Form eines Roboters ausgebildet. Sie weist einen Roboterarm 18 auf, an dem eine Werkstückaufnahmevorrichtung 14 zum Aufnehmen der Werkstücke 2 angeordnet ist. Bei den Werkstückaufnahmevorrichtungen 14 kann es sich z.B. um an sich bekannte Saugvorrichtungen, welche die Werkstücke 2 zum Transport ansaugen, aber auch um Greifvorrichtungen handeln, welche die Werkstücke 2 seitlich greifen. Auch dies ist an sich bekannt. Die Werkstückaufnahmevorrichtung 14 ist mittels des Roboterarms 18 in diesem Ausführungsbeispiel sowohl in vertikaler Raumrichtung 15 als auch in den zwei horizontalen Raumrichtungen 16 und 17 bewegbar. Grundsätzlich sind aber auch Ausführungsbeispiele denkbar, in denen die Werkstückaufnahmevorrichtung 14 nur in der vertikalen Raumrichtung 15 und einer horizontalen Raumrichtung 16 bewegbar sind. Die Hebevorrichtung 13 ist günstigerweise so ausgebildet, dass mit ihr das an der Werkstückaufnahmevorrichtung 14 befestigte Werkstück 2 auch um eine vertikale Achse gedreht werden kann, um es so in der gewünschten Ausrichtung der jeweiligen Zuführeinrichtung 9 zuführen zu können. Die Hebevorrichtung 13 ermöglicht es also, das jeweils benötigte bzw. vorgesehene Werkstück 2 der jeweiligen Zuführeinrichtung 9 in der jeweils vorgesehenen Ausrichtung zuzuführen.

Hinter der Sägestation 51 mit der Sägelinie 4 befindet sich in diesem Ausführungsbeispiel eine Abfallentsorgungsvorrichtung 32, in der, wie an sich bekannt, bei den Sägevorgängen entstehende Abfallstücke, welche nicht mehr benötigt werden, entsorgt werden. In die Abfallentsorgungsvorrichtung 32 kann eine entsprechende Zerkleinerungsvorrichtung für die Abfälle integriert sein. Im Anschluss daran folgt in dem hier gezeigten Ausführungsbeispiel eine Sortierstation 31. Diese weist in diesem Ausführungsbeispiel Hubvorrichtungen 49 und Förderbänder 50 für die Werkstücke 2 auf. Handelt es sich bei den Werkstücken 2 um Endformate, so werden diese mittels der entsprechenden Hubvorrichtungen 49 und Förderbänder 50 in der Sortierstation 31 dem Abführbereich 30 zugeführt. Handelt es sich hingegen bei den Werkstücken 2 in der Sortierstation 31 um solche Formate, die z.B. mittels Dritt- oder Viertschnitten noch weiter zersägt werden müssen, so werden diese in bevorzugten Ausgestaltungsformen wie der hier gezeigten, mittels einer Rückführeinrichtung 29 aus dem Bereich hinter der Sägelinie 4 wieder in den Bereich vor der Sägelinie 4 zurückgefördert. Solche Rückführeinrichtungen 29 sind in verschiedensten Ausgestaltungsformen an sich bekannt. Es kann sich, wie hier in diesem Beispiel um, um die Sägelinie 4 herumführende Rollenbahnen handeln. Genauso gut ist es denkbar, an sich bekannte Hebevorrichtungen wie Portalkräne oder Roboter als Rückführeinrichtungen verwenden, um die zurückzuführenden Werkstücke 2 über die Sägelinie 4 hinweg wieder in den Bereich vor der Sägelinie 4 zurückzubefördern. Bei um die Sägelinie 4 herumführenden Förderbändern oder Rollenbahnen sind diese in der Regel horizontal ausgebildet, sodass die Werkstücke 2 horizontal liegend auf ihnen befördert werden. Im hier gezeigten Ausführungsbeispiel ist dies anders. Dort ist aus Gründen der Platzersparnis die die Rückführeinrichtung 29 bildende Rollenbahn mit den Rollen 47 schräg aufgestellt, sodass die zurückzuführenden Werkstücke 2 schräg aufgestellt auf ihr zurückgefördert werden. In bevorzugten Ausgestaltungsformen sind die Rollen 47 hierbei mit ihrer Längserstreckungsrichtung in einem Winkel zwischen 5° und 20° gegen die Vertikale aufgestellt. Liegen die Werkstücke an den Rollen 47 an, so stehen sie mit ihren Schmalseiten auf Förderbändern 48 der Rückführeinrichtung 29, welche dafür sorgen, dass die Werkstücke 2 wieder in den Bereich vor der Sägelinie 4 zurücktransportiert werden. Das Aufstellen der Werkstücke 2 bzw. das Aufnehmen der Werkstücke 2 auf diese Art der Rückführeinrichtung 29 erfolgt an der Werkstückaufnahmeklappe 45. Hier sind die Rollen 47 zwischen der in Fig. 1 bis 4 gezeigten horizontalen Ausrichtung und der entsprechend aufgestellten Ausrichtung hin und her klappbar ausgebildet. In der in den Figuren gezeigten horizontalen Stellung können die zurückzufördernden Werkstücke 2 von der Sortierstation 31 über die entsprechenden Förderbänder 50 auf die Rollen 47 der Werkstückaufnahmeklappe 45 aufgeschoben werden. Nach erfolgtem Hochklappen der Werkstückaufnahmeklappe 45 werden die Werkstücke 2 an der Sägelinie 4 vorbei zurücktransportiert und dann mittels der Werkstückabgabeklappe 46 wieder in die Horizontale heruntergeklappt. Dort können sie vom dort vorhandenen Förderband 50 wieder in den Arbeitsbereich der Hebevorrichtung 13 bewegt werden, um dort von der Hebevorrichtung 13 dann zu gegebener Zeit wieder einer der Zuführeinrichtungen 9 zugeführt zu werden. Die Werkstückabgabeklappe 46 kann hierzu in derselben Art und Weise wie die Werkstückaufnahmeklappe 45 ausgebildet sein.

Die Fig. 5 und 6 zeigen Seitenansichten auf die Bearbeitungsstation 28. Zu sehen ist die Hebevorrichtung 13, mit der die Werkstücke 2 der Zuführeinrichtung 9 zugeführt werden können. Bei der Zuführeinrichtung 9 handelt es sich, wie in Fig. 5 und 6 gut zu sehen, in diesem Ausführungsbeispiel um eine Förderbahn 52, hier konkret um eine angetriebene Rollenbahnen. Der Antrieb erfolgt in an sich bekannter Art und Weise mittels der Antriebsmotoren 53. Im hier gezeigten Ausführungsbeispiel reichen die hier zweigeteilt ausgeführten Zuführeinrichtungen 9 sehr weit in den jeweiligen Arbeitsbereich 7 hinein, bis fast zur Sägelinie 4. Dies kann natürlich auch anders ausgestaltet werden. Wichtig ist nur, dass die Zuführeinrichtungen 9 so ausgestaltet werden, dass sie die Werkstücke 2 in Transportrichtung 10 bis in den Arbeitsbereich 7 der jeweils zugeordneten Vorschubeinrichtung 6 transportieren können, damit die Vorschubeinrichtung 6 dann im Arbeitsbereich 7 die zugelieferten Werkstücke 2 mittels ihrer Greifer 12 greifen und weiter der Sägelinie 4 in Vorschubrichtung 8 zuführen können. Die Transportrichtungen 10 und die Vorschubrichtungen 8 sind günstigerweise, wie auch dargestellt, parallel zueinander angeordnet. Fig. 5 zeigt, wie ein Werkstück 2 mittels der Hebevorrichtung 13 der Zuführeinrichtung 9 zugeführt wird, während ein davor bereits in den Arbeitsbereich 7 mittels der Zuführeinrichtung 9 verschobenes Werkstück 2 gerade mittels der Greifer 12 der zugeordneten Vorschubeinrichtung 6 gegriffen und gegen einen Anschlag 75 vor der Sägelinie 4 gefahren wird. Mittels dieses Anschlags 57 kann die Position des vorderen Endes des Werkstücks 2 sehr genau bestimmt werden, sodass nach Absenken des Anschlags 75 unter die Auflageebene des Werkstückauflagetisches 3 das Werkstück 2 dann mittels der Vorschubeinrichtung 6 in Vorschubrichtung 8 zur Durchführung der Sägevorgänge entlang der Sägelinie 4 entsprechend exakt auf der Sägelinie 4 positioniert werden kann. Anstelle des heb- und senkbar angeordneten Anschlags 75 können auch optische oder mechanische Messeinrichtungen vorgesehen sein, um die exakte Position des vorderen Endes des Werkstücks 2 vor der Sägelinie 4 zu bestimmen. Es kann sich z.B. im Fall von optischen Messeinrichtungen um Lichtschranken oder Kamerasysteme handeln. Mechanische Messeinrichtungen sind z.B. Messfinger oder Messknöpfe, welche beim Überfahren mittels des Werkstücks 2 z.B. in die Werkstückauflageebene des Werkstückauflagetisches 3 abgesenkt werden und ein Signal abgeben, dass das vordere Ende des Werkstücks 2 auf sie aufgetroffen ist, während beim Anschlag 75 das Werkstück 2 während des Anschlagens am Anschlag 75 kurz angehalten wird, kann die Positionsbestimmung des vorderen Endes des Werkstücks 2 bei den optischen oder mechanischen Messsystemen während der Überfahrt, also ohne Anhalten des Werkstücks 2 durchgeführt werden.

Der sich in diesem Ausführungsbeispiel im Arbeitsbereich 7 befindliche Teil der Zuführeinrichtung 9 bzw. Förderbahn 52 weist günstigerweise einen Freilauf auf, der dann aktiviert werden kann, wenn das Werkstück 2 mittels der Vorschubeinrichtung 6 in Vorschubrichtung 8 transportiert wird. So kann der Reibungswiderstand am Werkstück 2 möglichst gering gehalten werden.

In Fig. 6 ist noch gezeigt, wie das von der Hebevorrichtung 13 auf der Zuführeinrichtung 9 abgelegte Werkstück 2 in den Arbeitsbereich 7 der Vorschubeinrichtung 6 hineingefördert wird, während das vorherige Werkstück 2, noch an der Vorschubeinrichtung 6 befestigt, der Sägelinie 4 zum Zersägen zugeführt wird. Durch die Erfindung stehen somit immer eine ausreichende Anzahl von Werkstücken 2 an der Sägelinie 4 zur Verfügung, sodass die Trennsäge 5 entlang der Sägelinie 4 möglichst unterbrechungsfrei Sägevorgänge durchführen kann.

In den Fig. 5 und 6 ist auch noch der an sich bekannte Aufbau der Sägestation 51 schematisiert dargestellt. Die Trennsäge 5 ist in diesem Ausführungsbeispiel in Form eines Kreissägeblattes ausgebildet und heb- und senkbar im Sägewagen 54 angeordnet. Dasselbe gilt für das gegebenenfalls vorhandene, hier in diesen Figuren nicht dargestellte, der Trennsäge 5 vorgeordnete Vorritzersägeblatt 57. Die Trennsäge 5 kann jedenfalls mittels des Sägewagens 54 zum Durchführen der Sägevorgänge entlang der Sägelinie 4 verfahren werden. Zum Andrücken des Werkstücks 2 auf den Werkstückauflagetisch 3 im Bereich der Sägelinie 4 während des Sägevorgangs ist die Druckbalkenvorrichtung 23 vorgesehen, welche, wie an sich bekannt, ausgebildet werden kann.

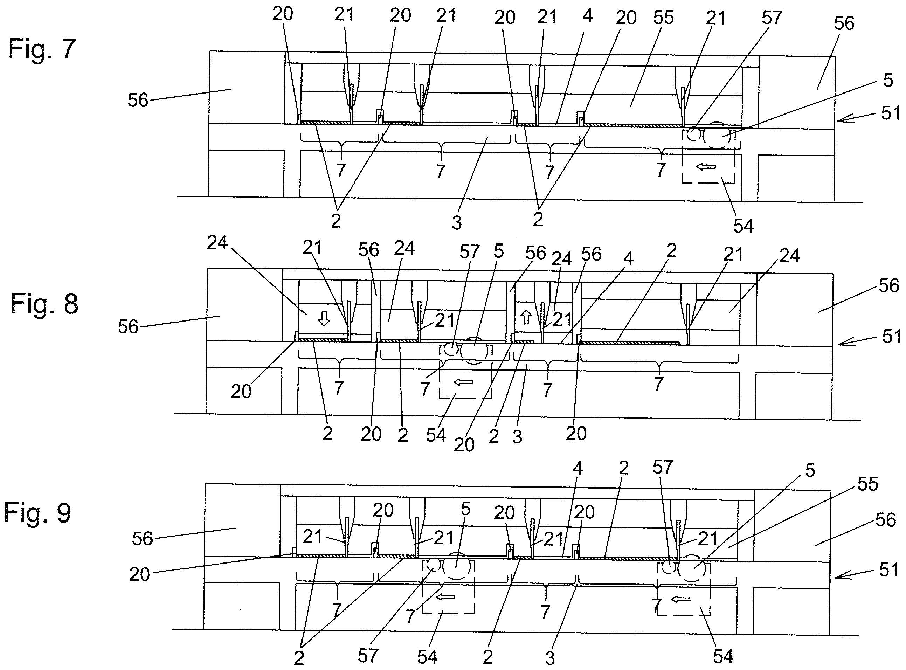

Fig. 7 bis 9 zeigen verschiedene Ausgestaltungsformen, wie die Druckbalkenvorrichtung 23 z.B. realisierbar ist. Gezeigt sind in den Fig. 7 bis 9 jeweils schematisierte Darstellungen aus dem Bereich der Sortierstation 31 in Blickrichtung entgegen der Vorschubrichtung 8. Die Druckbalkenvorrichtung 23 weist in allen drei Ausführungsvarianten jeweils an sich bekannte Druckbalkensteher 56 auf. An diesen ist in der Variante gemäß Fig. 5 ein durchgehender Druckbalken 55 heb- und senkbar angeordnet. Er kann die auf der Sägelinie 4 bzw. dem Werkstückauflagetisch 3 liegenden Werkstücke 2 im abgesenkten Zustand auf den Werkstückauflagetisch 3 andrücken. Im angehobenen Zustand des Druckbalkens 55 können die in den jeweiligen Arbeitsbereichen 7 angeordneten Werkstücke 2 von den jeweiligen Vorschubeinrichtungen 6 in der jeweiligen Vorschubrichtung 8 so weiter geschoben werden, dass sie für den nächsten Schnitt exakt auf der Sägeline 4 positioniert werden können.

Gut zu sehen sind in Fig. 7, 8 und 9 auch die parallel zu den Vorschubrichtungen 8 verlaufenden Anschlagschienen 20, welche in diesem Ausführungsbeispiel die Arbeitsbereiche 7 der Vorschubeinrichtung 6 seitlich gegeneinander abgrenzen. Außerdem dienen die Anschlagschienen 20 der Ausrichtung der Werkstücke 2. Hierzu können die jeweiligen Ausrichteinrichtungen 21 im jeweiligen Arbeitsbereich 7 das jeweilige Werkstück 2 an die jeweilige Anschlagschiene 20 drücken, so wie dies an sich bekannt ist.

Während in Fig. 7 ein durchgehender Druckbalken 55 für alle Arbeitsbereiche 7 vorgesehen ist, zeigt Fig. 8 schematisiert eine Variante, bei der der Druckbalken in unabhängig voneinander heb- und senkbare Druckbalkensegmente 24 unterteilt ist. Jedem Arbeitsbereich 7 ist in dem Ausführungsbeispiel gemäß Fig. 8 ein eigenes Druckbalkensegment 24 zugeordnet. Dies erhöht weiter die Flexibilität des Systems, da gemäß Fig. 8 das jeweilige Druckbalkensegment 24 nur dann zum Andrücken des im jeweiligen Arbeitsbereich 7 angeordneten Werkstücks 2 abgesenkt sein muss, während dieses Werkstück 2 tatsächlich zersägt wird. Davor und danach kann das jeweilige Druckbalkensegment 24 bereits angehoben werden, um mittels der jeweiligen Vorschubeinrichtung 6 das jeweilige Werkstück 2 im jeweiligen Arbeitsbereich 7 schon für den nächsten Schnitt weiter zu transportieren und zu positionieren.

Fig. 9 zeigt nun noch an einem Beispiel, dass nicht zwingend vorgesehen sein muss, dass nur eine Trennsäge 5 pro Sägelinie 4 vorhanden ist. Fig. 9 veranschaulicht, dass entlang der Sägelinie 4 auch mehrere, in Fig. 9 zwei, Trennsägen 5 verfahrbar angeordnet sein können. Im Fall von diesen Varianten sind die entlang der Sägelinie 4 verfahrbaren Trennsägen 5 bevorzugt nicht miteinander gekoppelt. Sie können also unabhängig voneinander bewegt werden, solange sie nicht miteinander kollidieren. Auch dies erhöht weiter die Flexibilität des Systems. In den Fig. 7 bis 9 ist auch das jeweils zusammen mit der Trennsäge 5 im jeweiligen Sägewagen 54 angeordnete Vorritzersägeblatt 57 zu sehen. In Fig. 9 handelt es sich wiederum um einen durchgehenden Druckbalken 55 für alle Arbeitsbereiche 7. Es kann aber genauso gut vorgesehen sein, dass in Fig. 9 jedem Arbeitsbereich 7 ein eigenes Druckbalkensegment 24 zugeordnet ist, so wie dies in Fig. 8 veranschaulicht ist.

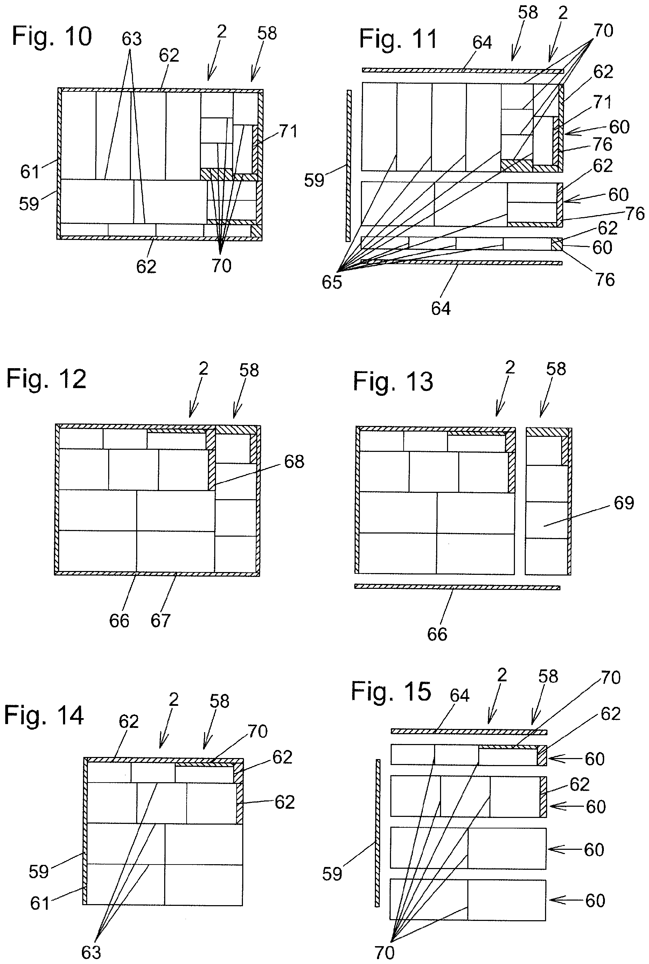

Fig. 10 zeigt beispielhaft nun einen ersten, auf ein Werkstück 2 hinauf projiziert dargestellten Schnittplan 58, gemäß dessen Vorgaben das Werkstück 2 mit der erfindungsgemäßen Plattenaufteilanlage 1 besäumt und zersägt werden kann. Bei dem Werkstück 2 kann es sich dabei sowohl um eine einzelne Platte als auch um einen Plattenstapel handeln. Es kann sich um Rohplatten aber auch um bereits bearbeitete Platten handeln. Das Werkstück 2 wird zum Abarbeiten des Schnittplans 58 aus dem Werkstückpuffer 33 von der Hebevorrichtung 34 in entsprechend gewünschter Ausrichtung auf den Werkstückauflagetisch 38 der ersten Bearbeitungsstation 25 abgelegt und dort von der ersten Vorschubvorrichtung 36 mittels dem Greifer 39 gegriffen. Beim Verschieben des Werkstücks 2 hin zur Sägestation 41 wird als erstes an der Besäumstation 40 der gemeinsame Saum 59 entlang der Saumlinie 61 vom Werkstück 2 abgetrennt. Bevorzugt ist dabei vorgesehen, dass der gemeinsame Saum 59 vollständig in Staub und Späne zerkleinert wird, sodass er durch eine hier nicht dargestellte Absaugvorrichtung der Besäumstation 40 abgesaugt werden kann. Alternativ kann die Besäumstation 40 natürlich auch so ausgebildet sein, dass beim Besäumvorgang Restabfallstreifen entstehen können, welche dann nach dem Abtrennen in der Besäumstation 40 entsorgt und vorzugsweise zerkleinert werden. Im hier gezeigten Ausführungsbeispiel wird das Werkstück 2 während des Besäumvorgangs mittels der ersten Vorschubvorrichtung 36 an der Besäumstation 40 vorbeigeschoben. Alternativ ist es auch denkbar, die Besäumstation 40 so auszubilden, dass das Besäumwerkzeug relativ zum, in diesem Moment ruhenden Werkstück 2 an diesem entlanggeführt wird, um den gemeinsamen Saum 59 entlang der Saumlinie 61 abzutrennen.

Nach Abtrennen des gemeinsamen Saums 59 schiebt die erste Vorschubvorrichtung 36 das Werkstück 2 so weit über die Sägelinie 44, dass der erste sonstige Saum 64 entlang der parallel zu den Erstschnittlinien 63 verlaufenden sonstigen Saumlinie 62 an der Sägelinie 44 abgetrennt werden kann. Der abgetrennte, sonstige Saum 64 wird in der Abfallentsorgungsvorrichtung 42 entsorgt. Das Werkstück 2 wird dann jeweils entsprechend weit über die Sägelinie 44 hinweggeschoben, dass entlang der Sägelinie 44 jeweils die Schnitte entlang der Erstschnittlinien 63 und anschließend auch entlang der hinteren, zu den Erstschnittlinien 63 parallelen sonstigen Saumlinie 62 durchgeführt werden können. Das Absenken des Druckbalkens 43 zur Durchführung der Sägevorgänge und anschließende Abheben zum Weitertransport des Werkstücks 2 kann wie an sich bekannt durchgeführt werden. Bevorzugt ist vorgesehen, dass während einem der Sägevorgänge an den Erstschnittlinien 63 oder den dazu parallelen sonstigen Saumlinien 62 die erste Vorschubvorrichtung 36 das Werkstück 2 loslässt und die zweite Vorschubvorrichtung 37 mit ihren Greifern 39 das Werkstück 2 greift, sodass der Vorschub für die weiteren Sägevorgänge entlang der Erstschnittlinien 63 und der dazu parallelen sonstigen Saumlinien 62 mittels der zweiten Vorschubvorrichtung 37 realisiert werden kann, während die erste Vorschubvorrichtung 36 bereits zurückfährt, um das nächste Werkstück 2 aufzunehmen. Nach Fertigstellung dieser Sägevorgänge entlang der Erstschnittlinien 63 und der dazu parallelen sonstigen Saumlinien 62 und der Entsorgung des hinteren sonstigen Saums 64 ist das Werkstück 2 in die Streifen 60, wie sie in Fig. 11 dargestellt sind, zersägt. Die Streifen 60 werden dann mittels der Einlagerungsvorrichtung 26 in den Speicher 22 eingelagert und können zum entsprechenden Zeitpunkt dann mittels der Entnahmevorrichtung 27 aus dem Speicher 22 wieder entnommen werden. Anschließend werden diese Streifen 60 dann als Werkstücke 2 mittels der Hebevorrichtung 13 den entsprechenden Zuführeinrichtungen 9 zugeführt. Dabei werden die Streifen 60 bzw. Werkstücke 2 günstigerweise so ausgerichtet, dass deren bereits besäumte Seite, an der der gemeinsame Saum 59 abgetrennt wurde, in Richtung hin zur Sägelinie 4 der Bearbeitungsstation 28 zeigen. Es ist aber auch eine Anordnung anders herum möglich. Sollte ein Drehen der Streifen 60 bzw. Werkstücke 2 für ihre gewünschte Ausrichtung auf den Zuführeinrichtungen 9 nötig sein, so kann dies mittels der Hebevorrichtung 13 erledigt werden. Die Streifen 60 bzw. Werkstücke 2 werden dann mittels der Zuführeinrichtungen 9 unabhängig voneinander den Arbeitsbereichen 7 der Vorschubeinrichtungen 6 zugeführt, dort von den Vorschubeinrichtungen 6 übernommen und der Sägelinie 4 zur Durchführung der Sägevorgänge entlang der Zweitschnittlinien 65 und der dazu parallelen sonstigen Saumlinien 62 zugeführt. Dabei werden mehrere Streifen 60 bzw. Werkstücke 2 in den nebeneinander angeordneten Arbeitsbereichen 7 unabhängig voneinander der Sägelinie 4 mittels der entsprechenden Vorschubeinrichtung 6 zugeführt. Optimal ist es, wenn bei einem Sägevorgang entlang der Sägelinie 4 in allen Arbeitsbereichen 7 Werkstücke 2 bzw. Streifen 60 liegen, welche bei diesem Sägevorgang zersägt werden. Abfallstücke, wie z.B. die an den jeweiligen Streifen 60 noch vorhandenen sonstigen Säume 76 können dann zu gegebener Zeit in der Abfallentsorgungseinrichtung 32 entsorgt werden. Die durch das Zersägen entlang der Zweitschnittlinien 65 aus den Streifen 60 entstandenen Formate bzw. Werkstücke 2 werden dann in der Sortierstation 31 in den Abführbereich 30 befördert, wenn es sich um Endformate handelt. Müssen an den im Zuge des Zersägens entlang der Zweitschnittlinien 65 entstandenen Teilen bzw. Werkstücken 2 noch Schnitte entlang der Drittschnittlinien 70 durchgeführt werden, so werden diese Formate bzw. Werkstücke 2 von der Rückführeinrichtung 29 wieder in den Bereich vor der Sägelinie 4 zurückgefördert und dort zu gegebener Zeit von der Hebevorrichtung 13 wieder einer der Zuführeinrichtungen 9 zugeführt, um die noch benötigten Drittschnitte an der Sägelinie 4 vornehmen zu können. Das Gleiche gilt dann anschließend, wenn noch Viertschnitte entlang der Viertschnittlinien 71 notwendig sind.

Fig. 12 zeigt beispielhaft einen anderen, auf ein Werkstück 2 projizierten Schnittplan 58, bei dem zunächst ein erster Saum 66 entlang der ersten Saumlinie 67 und dann ein Kopfteil 69 entlang der Kopfschnittlinie 68 vom Werkstück 2 abgetrennt werden müssen. Dies erfolgt bevorzugt an der vorgelagerten Bearbeitungsstation 25. Hierzu wird das Werkstück 2 wiederum aus dem Werkstückpuffer 33 mittels der Hebevorrichtung 34 auf dem Werkstückauflagetisch 38 abgelegt und dort von der ersten Vorschubvorrichtung 36 mittels deren Greifer 39 gegriffen. Beim Vorschub in Richtung hin zur Sägelinie 44 bzw. zur Sägestation 41 wird der erste Saum 66 entlang der ersten Saumlinie 67 mittels der Besäumstation 40 abgetrennt. Hierzu bestehen wiederum alle die Möglichkeiten, wie sie weiter oben bezüglich des Abtrennens des gemeinsamen Saums 59 von dem Werkstück aus Fig. 10 geschildert wurden. Nach dem Abtrennen des ersten Saumes 66 wird das Werkstück 2 von der ersten Vorschubvorrichtung 36 so über die Sägelinie 44 geschoben, dass nach entsprechendem Absenken des Druckbalkens 43 der Sägevorgang entlang der Kopfschnittlinie 68 durchgeführt und somit das Kopfteil 69 vom Werkstück 2 abgetrennt wird. Das weitere Zersägen des Kopfteils 69 kann, wie beim Stand der Technik an sich bekannt, in geeigneter Art und Weise durchgeführt werden, ohne dass dies erläutert werden muss. Das nach Abtrennen des ersten Saumes 66 und des Kopfteils 69 verbleibende Werkstück 2 ist in Fig. 14 dargestellt. Dieses wird nun zunächst von der ersten Vorschubvorrichtung 36 ein Stück weit von der Sägelinie 44 wieder zurückgezogen und um eine vertikale Achse um 90° gedreht. Dieses Drehen kann mittels der Hebevorrichtung 34 oder einer hier nicht dargestellten, in den Werkstückauflagetisch 38 integrierten Dreheinrichtung vorgenommen werden. Anschließend greift die erste Vorschubvorrichtung 36 das Werkstück 2 und schiebt es an der Besäumstation 40 vorbei, wobei dann der gemeinsame Saum 59 entlang der Saumlinie 61 abgetrennt wird, bevor dann das Zersägen entlang der Erstschnittlinien 63 und der dazu parallelen sonstigen Saumlinie 62 an der Sägelinie 44 analog zu der bezüglich Fig. 10 und 11 geschilderten Vorgehensweise erfolgt. Die dabei entstehenden, in Fig. 15 dargestellten Streifen 60 bzw. Werkstücke 2 werden wiederum im Speicher 22 zwischengelagert und dann in der Bearbeitungsstation 28 analog zu dem Beispiel aus Fig. 11 erfindungsgemäß weiter aufgeteilt. Gleiches gilt für die gegebenenfalls noch zu erledigenden Drittschnitte entlang der Drittschnittlinien 70.

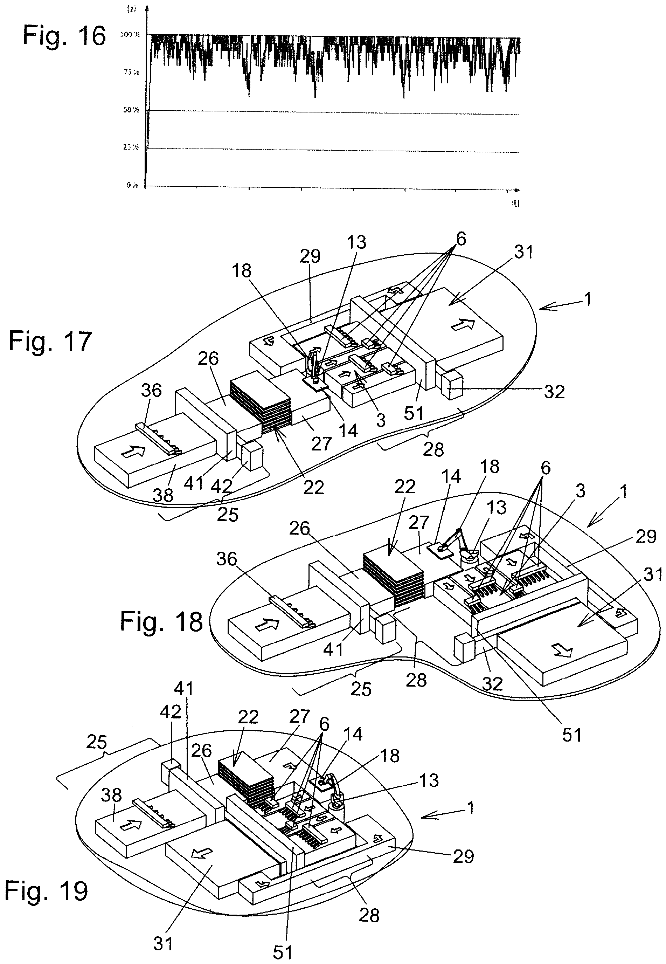

Mit der erfindungsgemäß ausgebildeten Plattenaufteilanlage wird ein sehr hoher Grad der Effizienz beim Aufteilen der Werkstücke 2 erreicht. Ziel ist es dabei, die Bearbeitungsstation 25 und 28 möglichst optimal auszulasten, sodass möglichst wenig Stillstandszeiten erreicht werden. Günstig ist es dabei, im Speicher 22 immer möglichst viele Werkstücke 2 bereitzuhalten, um diese dann möglichst unterbrechungsfrei in der Bearbeitungsstation 28 erfindungsgemäß abarbeiten zu können. Die ist in Fig. 16 dargestellt. Dort ist der Füllgrad z des Speichers 22 gegen die Zeit t dargestellt. Zu sehen ist, dass permanent ein sehr hoher Füllgrad z sichergestellt ist und somit im Speicher 22 immer eine ausreichende Anzahl von Werkstücken 2 bereits steht.

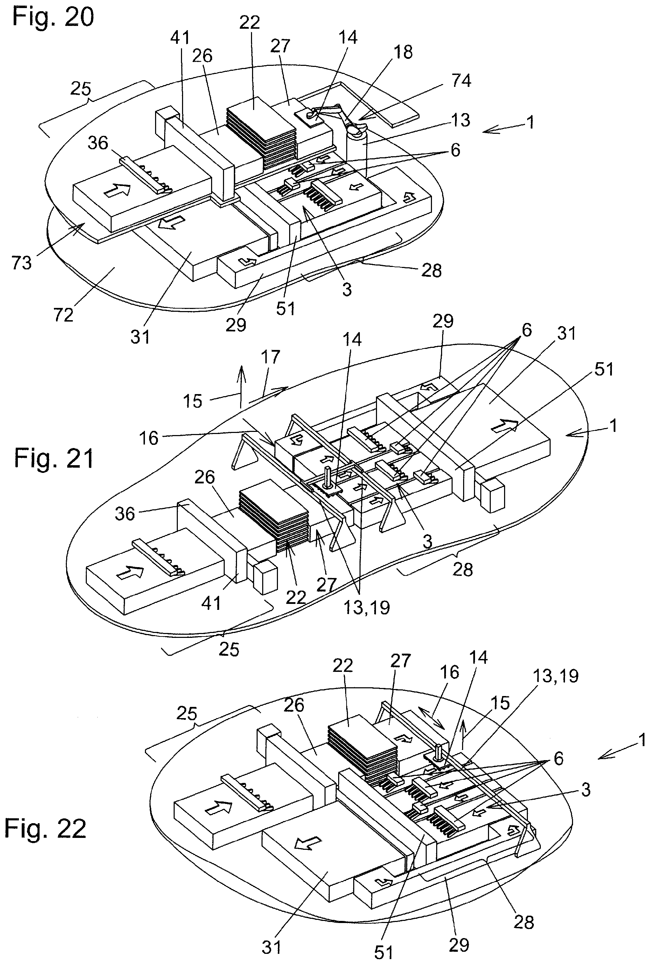

In Fig. 17 ist die bereits diskutierte, in den bisherigen Figuren dargestellte Plattenaufteilanlage 1 noch einmal schematisiert dargestellt, wobei allerdings nur eine Vorschubvorrichtung 36 bei der Bearbeitungsstation 25 gezeigt ist. Die Fig. 18 bis 22 veranschaulichen in entsprechend stark schematisierter Weise Varianten, wie die Bearbeitungsstationen 25 und 28 der bislang geschilderten Plattenaufteilanlage 1 in anderer Art und Weise angeordnet werden können. In Fig. 18 ergibt sich eine in Draufsicht L-förmige Anordnung. In Fig. 19 eine U-förmige Anordnung. In Fig. 20 ist die Plattenaufteilanlage in zwei übereinander angeordneten Etagen 72 und 73 angeordnet, die vorgelagerte Bearbeitungsstation 25 befindet sich in der oberen Etage 72 zusammen mit dem Speicher 22 und dessen Einlagerungs- und Entnahmevorrichtung 26 und 27. Die Bearbeitungsstation 28 mit der Sortierstation 31 sind in der Etage 72 darunter angeordnet. Die Hebevorrichtung 13 entnimmt die mittels der Bearbeitungsstation 28 zu bearbeitenden Werkstücke aus der Entnahmevorrichtung 27 des Speichers 22 in der oberen Etage 73 und führt diese durch den Deckendurchbruch 74 hindurch zu den Zuführeinrichtungen 9 der in der unteren Etage 72 angeordneten Bearbeitungsstation 28. Die Plattenaufteilanlage 1 in Fig. 21 ist bis auf die Art der Hebevorrichtung 13 wie das Ausführungsbeispiel gemäß Fig. 17 ausgebildet. In Fig. 21 ist die Hebevorrichtung 13 allerdings als Portalkran 19 ausgeführt, mit dem die Werkstückaufnahmevorrichtung 14 in drei Raumrichtungen 15, 16, 17 bewegt werden kann. Auch in die Werkstückaufnahmevorrichtung 14 gemäß Fig. 21 ist günstigerweise eine Drehvorrichtung eingearbeitet. Fig. 22 zeigt eine Abwandlungsform von Fig. 19. Hier ist ebenfalls eine Hebevorrichtung 13 in Form eines Portalkrans 19 vorgesehen. Bei diesem ist die Werkstückaufnahmevorrichtung 14 nur in der vertikalen Raumrichtung 15 und in einer horizontalen Raumrichtung 16 bewegbar.

Bis auf die genannten Unterschiede gilt zu den Plattenaufteilanlagen gemäß der Fig. 18 bis 22 das zu den Fig. 1 bis 17 Beschriebene.

**Legende Zu den Hinweisziffern**

| | | | |
|---|---|---|---|
| 1 | Plattenaufteilanlage | | Vorschubvorrichtung |
| 2 | Werkstück | 37 | zweite Vorschubvorrichtung |
| 3 | Werkstückauflagetisch | | |
| 4 | Sägelinie | 38 | Werkstückauflagetisch |
| 5 | Trennsäge | 39 | Greifer |
| 6 | Vorschubeinrichtung | 40 | Besäumstation |
| 7 | Arbeitsbereich | 41 | Sägestation |
| 8 | Vorschubrichtung | 42 | Abfallensorgungsvorrichtung |
| 9 | Zuführeinrichtung | | |
| 10 | Transportrichtung | 43 | Druckbalken |
| 11 | Träger | 44 | Sägelinie |
| 12 | Greifer | 45 | Werkstückaufnahmeklappe |
| 13 | Hebevorrichtung | 46 | Werkstückabgabeklappe |
| 14 | Werkstückaufnahmevorrichtung | 47 | Rolle |
| | | 48 | Förderband |
| 15 | vertikale Raumrichtung | 49 | Hubvorrichtung |
| 16 | horizontale Raumrichtung | 50 | Förderband |
| | | 51 | Sägestation |
| 17 | horizontale Raumrichtung | 52 | Förderbahn |
| | | 53 | Antriebsmotor |
| 18 | Roboterarm | 54 | Sägewagen |
| 19 | Portalkran | 55 | Druckbalken |
| 20 | Anschlagschiene | 56 | Druckbalkensteher |
| 21 | Ausrichteinrichtung | 57 | Vorritzersägeblatt |
| 22 | Speicher | 58 | Schnittplan |
| 23 | Druckbalkenvorrichtung | 59 | gemeinsamer Saum |
| 24 | Druckbalkensegment | 60 | Streifen |
| 25 | Bearbeitungsstation | 61 | Saumlinie |
| 26 | Einlagerungsvorrichtung | 62 | sonstige Saumlinie |
| 27 | Entnahmevorrichtung | 63 | Erstschnittlinie |
| 28 | Bearbeitungsstation | 64 | sonstiger Saum |
| 29 | Rückführeinrichtung | 65 | Zweit schnittlinie |
| 30 | Abführbereich | 66 | erster Saum |
| 31 | Sortierstation | 67 | erste Saumlinie |
| 32 | Abfallentsorgungsvorrichtung | 68 | Kopfschnittlinie |
| | | 69 | Kopfteil |
| 33 | Werkstückpuffer | 70 | Drittschnittlinie |
| 34 | Hebevorrichtung | 71 | Viertschnittlinie |
| 35 | Werkstückaufnahmevorrichtung | 72 | Etage |
| | | 73 | Etage |
| 36 | erste Vorschubvorrichtung | 74 | Deckendurchbruch |
| | | 75 | Anschlag |

## Patentansprüche

1. Plattenaufteilanlage (1) zum Zersägen von Werkstücken(2), bestehend aus einer Platte oder einem Plattenstapel, wobei die Plattenaufteilanlage (1) einen Werkstückauflagetisch (3) und eine Sägelinie (4) und eine Trennsäge (5), welche entlang der Sägelinie (4) verfahrbar ist, und zwei oder mehr voneinander unabhängig verfahrbare Vorschubeinrichtungen (6) zum Verschieben der auf dem Werkstückauflagetisch (3) liegenden Werkstücke (2) aufweist, wobei den Vorschubeinrichtungen (6) jeweils ein eigener Arbeitsbereich (7) zugeordnet ist, in dem das jeweilige Werkstück (2) von der jeweiligen Vorschubeinrichtung (6) in einer jeweiligen Vorschubrichtung (8) hin zur Sägelinie (4) verschiebbar ist, wobei die Arbeitsbereiche (7) der Vorschubeinrichtungen (6) nebeneinander auf dem Werkstückauflagetisch (3) ausgebildet sind und die Vorschubrichtungen (8) der Vorschubeinrichtungen (6) parallel zueinander verlaufen, **dadurch gekennzeichnet, dass** jeder Vorschubeinrichtung (6) eine Zuführeinrichtung (9) der Plattenaufteilanlage (1) zugeordnet ist, wobei mit jeder der Zuführeinrichtungen (9) jeweils zumindest eines der Werkstücke (2) in den Arbeitsbereich (7) der zugeordneten Vorschubeinrichtung (6) transportierbar ist.

2. Plattenaufteilanlage (1) nach Anspruch 1, **dadurch gekennzeichnet, dass** die Arbeitsbereiche (7) der Vorschubeinrichtungen (8) jeweils zwischen der Sägelinie (4) und der, der jeweiligen Vorschubeinrichtung (6) zugeordneten Zuführeinrichtung (9) ausgebildet sind, und/oder dass mit jeder der Zuführeinrichtungen (9) jeweils zumindest eines der Werkstücke (2) in einer Transportrichtung (10) der jeweiligen Zuführeinrichtung (9) in den Arbeitsbereich (7) der zugeordneten Vorschubeinrichtung (6) transportierbar ist und die jeweiligen Transportrichtungen (10) der Zuführeinrichtungen (9) parallel zu den Vorschubrichtungen (8) der Vorschubeinrichtungen (6) verlaufen.

3. Plattenaufteilanlage (1) nach Anspruch 1 oder 2, **dadurch gekennzeichnet, dass** jede der Vorschubeinrichtungen (6) einen orthogonal zu ihrer Vorschubrichtung (8) verlaufenden und in ihrer Vorschubrichtung (8) verfahrbaren Träger (11) mit zumindest einem daran heb- und senkbar angeordneten Greifer (12) zum Greifen eines der Werkstücke (2) aufweist und/oder dass die Zuführeinrichtungen (9) jeweils als angetriebene Förderbahnen (52), vorzugsweise als angetriebene Rollenbahnen, ausgebildet sind, auf denen jeweils zumindest eines der Werkstücke (2) liegend transportierbar ist.

4. Plattenaufteilanlage (1) nach einem der Ansprüche 1 bis 3, **dadurch gekennzeichnet, dass** die Plattenaufteilanlage (1) eine Hebevorrichtung (13) zum Zuführen des jeweiligen Werkstücks (2) zur jeweiligen Zuführeinrichtung (9) von oben und zum Ablegen des jeweiligen Werkstücks (2) bei, vorzugsweise auf, der jeweiligen Zuführeinrichtung (9) aufweist.

5. Plattenaufteilanlage (1) nach Anspruch 4, **dadurch gekennzeichnet, dass** die Hebevorrichtung (13) eine Werkstückaufnahmevorrichtung (14) zum Aufnehmen der Werkstücke (2) aufweist, welche in der vertikalen Raumrichtung (15) und in ein oder zwei horizontalen Raumrichtungen (16, 17) bewegbar ist.

6. Plattenaufteilanlage (1) nach Anspruch 5, **dadurch gekennzeichnet, dass** die Hebevorrichtung (13) einen, in den Raumrichtungen (15, 16, 17) bewegbaren Roboterarm (18) aufweist, an dem die Werkstückaufnahmevorrichtung (14) angeordnet ist, oder dass die Hebevorrichtung (13) einen Portalkran (19) aufweist, mit dem die Werkstückaufnahmevorrichtung (14) in den Raumrichtungen (15, 16, 17) bewegbar ist.

7. Plattenaufteilanlage (1) nach einem der Ansprüche 1 bis 6, **dadurch gekennzeichnet, dass** die Arbeitsbereiche (7) der Vorschubeinrichtungen (6) voneinander getrennt ausgebildet sind.

8. Plattenaufteilanlage (1) nach Anspruch 7, **dadurch gekennzeichnet, dass** zwischen jeweils zwei zueinander benachbarten Arbeitsbereichen (7) zumindest bereichsweise jeweils eine Anschlagschiene (20) angeordnet ist.

9. Plattenaufteilanlage (1) nach einem der Ansprüche 1 bis 8, **dadurch gekennzeichnet, dass** zumindest einem der Arbeitsbereiche (7), vorzugsweise allen Arbeitsbereichen (7), eine Ausrichteinrichtung (21) der Plattenaufteilanlage (1) zum Ausrichten des jeweiligen Werkstücks (2), vorzugsweise in Richtung parallel und/oder orthogonal zu der jeweiligen Vorschubrichtung (8), zugeordnet ist.

10. Plattenaufteilanlage (1) nach einem der Ansprüche 4 bis 9, **dadurch gekennzeichnet, dass** sie einen Speicher (22) zum Speichern der Werkstücke (2) aufweist, aus dem die Werkstücke (2), vorzugsweise von der Hebevorrichtung (13), entnehmbar sind.

11. Plattenaufteilanlage (1) nach Anspruch 10, **dadurch gekennzeichnet, dass** der Speicher (22) eine Sortierfunktion aufweist, aufgrund der die Werkstücke (2), vorzugsweise mittels der Hebevorrichtung (13), unabhängig von der Reihenfolge ihrer Einlagerung aus dem Speicher (22) entnehmbar sind.

12. Plattenaufteilanlage (1) nach einem der Ansprüche 1 bis 11, **dadurch gekennzeichnet, dass** der Sägelinie (4) eine Druckbalkenvorrichtung (23) mit mehreren, voneinander unabhängig betätigbaren und jeweils einem oder mehreren der Arbeitsbereiche (7) zugeordneten Druckbalkensegmenten (24) zum Andrücken zumindest eines der Werkstücke (2) auf den Werkstückauflagetisch (3) zugeordnet ist.

13. Plattenaufteilanlage (1) nach einem der Ansprüche 1 bis 12, **dadurch gekennzeichnet, dass** die Plattenaufteilanlage (1) zwei oder mehr Trennsägen (5) aufweist, welche, vorzugsweise ungekoppelt, entlang der Sägelinie (4) verfahrbar sind.

14. Plattenaufteilanlage (1) nach Anspruch 1 bis 13, **dadurch gekennzeichnet, dass** die Plattenaufteilanlage (1) zumindest eine vorgelagerte Bearbeitungsstation (25) zum Zersägen und/oder Besäumen der Werkstücke (2) vor ihrer Zuführung zu den Zuführeinrichtungen (9) aufweist.

15. Verfahren zum Betrieb einer Plattenaufteilanlage (1) nach einem der Ansprüche 1 bis 14, **dadurch gekennzeichnet, dass** die Werkstücke (2) mittels der Zuführeinrichtungen (9) voneinander unabhängig jeweils dem Arbeitsbereich (7) der, der jeweiligen Zuführeinrichtung (9) zugeordneten Vorschubeinrichtung (6) zugeführt werden, vorzugsweise während jeweils ein anderes Werkstück (2) von der jeweiligen Vorschubeinrichtung (6) der Sägelinie (4) zum Zersägen zugeführt wird.

16. Verfahren nach Anspruch 15, **dadurch gekennzeichnet, dass** bei jedem Sägevorgang entlang der Sägelinie (4) in allen Arbeitsbereichen (7) Werkstücke (2) liegen, welche bei diesem Sägevorgang zersägt werden.
